# EUROPEAN PATENT APPLICATION

(11) **EP 1 632 931 A2**
(43) Date of publication of application: **08.03.2006**
(21) Application number: 05019113.9
(22) Date of filing: 02.09.2005
(51) Int. Cl.: G09G 3/36, G09G 5/02

(54) **Apparatus for controlling color liquid crystal display and method thereof**

(30) Priority: 07.09.2004 KR 2004071328
(71) Applicant: LG Electronics Inc., Yongdungpo-gu Seoul (KR)
(72) Inventor: Young-Jin, Choi, Gwangmyeong-si, Gyeonggi-Do (KR)
(74) Representative: von Hellfeld, Axel

(57) **Abstract**

An apparatus for controlling a color liquid crystal display and method thereof are disclosed, by which data transfer efficiency is raised in a manner of changing an input interface type of an LCD controller, by which a same-sized video can be outputted with a smaller number of clocks, and by which practical applicability of CPU is enhanced. The present invention includes a clock control unit providing a clock for operating each module, an interface unit receiving 16-bit data each clock according to a control signal of the clock control unit, a pair of 18-bit RGB buffers storing data transferred via the interface unit, a graphic buffer storing graphic data provided from a pair of the RGB buffers, a switching block storing data signals provided from a pair of the RGB buffers in the graphic buffer, and a digital/analog converting unit converting digital R/G/B data stored in the graphic buffer to an analog signal to output.

## Description

This application claims the benefit of the Korean Patent Application No. 10-2004-0071328, filed on September 7, 2004, which is hereby incorporated by reference as if fully set forth herein.

### BACKGROUND OF THE INVENTION

### Field of the Invention

The present invention relates to a color liquid crystal display, and more particularly, to an apparatus for controlling a color liquid crystal display and method thereof. Although the present invention is suitable for a wide scope of applications, it is particularly suitable for reducing a processing time of a central processing unit having a 16-bit interface.

### Discussion of the Related Art

Generally, a liquid crystal display (hereinafter abbreviated LCD) is an instrument displaying a color video by receiving three kinds of signals R (red), G (green) and B (blue). An LCD widely used for a commercial portable terminal normally supports a 5:6:5 mode or 6:6:6 mode. The 5:6:5-mode LCD represents R, G and B with 5-, 6- and 5-bits, respectively to represent about 65,000 colors. And, the 6:6:6-mode LCD represents R, G and B with 6-bits each to represent about 260,000 colors.

An LCD interfaces can be classified into a parallel type and a serial type. The parallel type interface can be further classified into an 8-bit type, a 16-bit type and an 18-bit type. And, the interface widely used for the commercial portable terminal is the 16-bit parallel type interface. This is because a CPU controlling a portable terminal provides the 16-bit type interface. In case of representing 65,000 colors (5:6:5 mode) in an LCD using the 16-bit parallel type interface, one CPU clock is needed to transfer data of one pixel. Hence, in order to represent an overall video on an LCD having a size of 'N x M', 'N x M' clocks are needed. Yet, in case of representing 260,000 colors (6:6:6 mode) by the LCD using the 16-bit parallel type interface, CPU clocks, which are twice more than are needed to represent the 5:6:5 mode, are needed to transfer data of one pixel. Namely, '2 x N x M' clocks are needed to represent one video on the LCD having a size of 'N X M'. And, it takes a data transfer time twice longer than is needed to represent 65,000 colors.

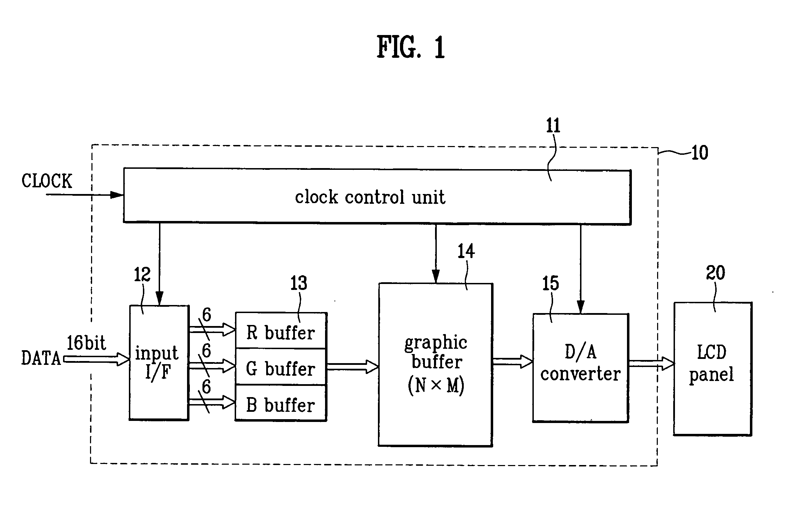

FIG. 1 is a block diagram of an LCD controller according to a related art, in which a 16-bit parallel type interface is used.

Referring to FIG. 1, an LCD controller 10 consists of a clock control unit 11, an input interface 12, an RGB buffer 13, a graphic buffer 14 and a D/A converter 15.

The clock control unit 11 provides a basic clock to operate each of the modules 12, 13, 14 and 15. The input interface 12 plays a role in storing 16-bit data inputted to the LCD module in the RGB buffer 13. The RGB buffer 13 temporarily stores RGB data configured with six bits each. The graphic buffer 14 stores overall video data to be outputted to an LCD panel 20. A size of the graphic buffer 14 corresponds to 'N x M' and each pixel is represented by 18-bits. And, the D/A converter 15 converts digital RGB data to an analog voltage to output. The LCD panel 20 is a final output end that outputs a video.

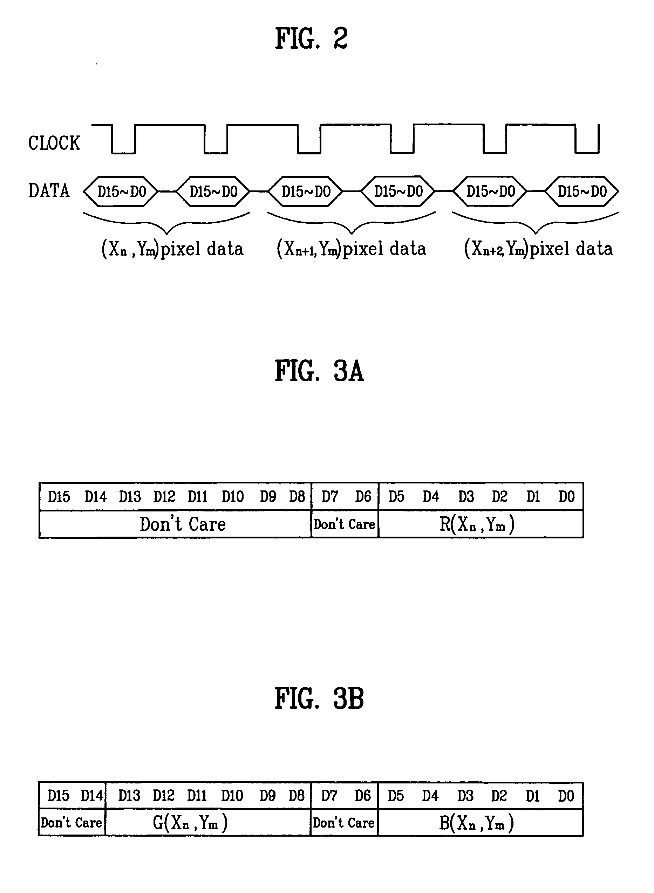

FIG. 2 is a diagram of an LCD controller input data format according to a related art.

Referring to FIG. 2, 16-bit data is inputted via the input interface 12 of the LCD controller each clock. The data inputted for two clocks configure one pixel of an 'N x M' sized video. Namely, the data inputted for '2 x N x M' clocks configure one video.

The RGB data inputted in the format shown in FIG. 2 are stored in the RGB buffer as shown in FIG. 3A and FIG. 3B and are stored in the graphic buffer by a control of the clock control unit.

FIG. 3A is an exemplary diagram of a 16-bit data format of a first clock in FIG. 2.

Referring to FIG. 3A, when data configuring one pixel are inputted to the LCD controller, 6-bit data between D5~D0 among the 16-bit data inputted for the first clock indicates a brightness of R.

FIG. 3B is an exemplary diagram of a 16-bit data format of a second clock in FIG. 2.

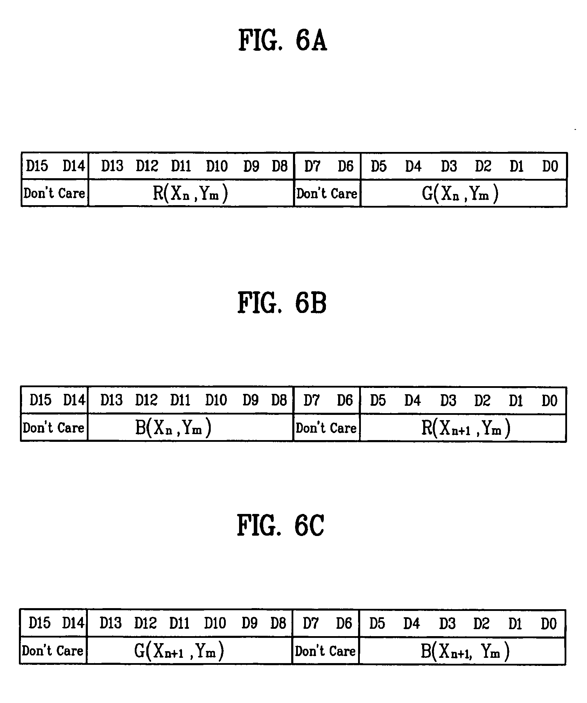

Referring to FIG. 3B, 6-bit data between D15~D10 among the 16-bit data inputted for the second clock indicates a brightness of G and 6-bit data between D5~D0 indicates a brightness of B. Namely, the rest of bit information failing to be explained in the above description among the overall 32-bit data inputted for two clocks is not used (Don't care).

All kind of pixel information repeatedly inputted according to the above process is stored in the graphic buffer to configure one video. Videos stored in the graphic buffer 14 are converted to an analog voltage via the D/A converter 15. And, the analog voltage finally drives the LCD panel 20.

However, in the related art system, since the data between D15~D10 of the 16-bit data inputted for the first clock are not used in receiving the data configuring one pixel, efficiency of data transfer is degraded. For this reason, '2 x N x M' CPU clocks are used in transferring the overall video of the 'N x M' size to the LCD module, a corresponding data transfer time is increased.

### SUMMARY OF THE INVENTION

Accordingly, the present invention is directed to an apparatus for controlling a color liquid crystal display and method thereof that substantially obviate one or more problems due to limitations and disadvantages of the related art.

An object of the present invention is to provide an apparatus for controlling a color liquid crystal display and method thereof, by which data transfer efficiency is raised in a manner of changing an input interface type of an LCD controller.

Another object of the present invention is to provide an apparatus for controlling a color liquid crystal display and method thereof, by which a same-sized video can be outputted with a smaller number of clocks.

A further object of the present invention is to provide an apparatus for controlling a color liquid crystal display and method thereof, by which practical applicability of CPU is enhanced.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a color liquid crystal display according to the present invention includes the steps of receiving 16-bit video data each clock and processing data of two pixels each three clocks to represent 260,000 colors.

In another aspect of the present invention, a method of controlling a color liquid crystal display includes the steps of receiving 16-bit video data each clock, temporarily storing R, G and B data represented by six bits each in a pair of 18-bit buffers, selecting the data stored in a pair of the 18-bit buffers according to a control signal of a clock control unit, storing the selected data in a graphic buffer, and driving a color liquid crystal using the video data stored in the graphic buffer.

In another aspect of the present invention, an apparatus for controlling a color liquid crystal display includes a clock control unit providing a clock for operating each module, an interface unit receiving 16-bit data each clock according to a control signal of the clock control unit, a pair of 18-bit RGB buffers storing data transferred via the interface unit, a graphic buffer storing graphic data provided from a pair of the RGB buffers, a switching block storing data signals provided from a pair of the RGB buffers in the graphic buffer, and a digital/analog converting unit converting digital R/G/B data stored in the graphic buffer to an analog signal to output.

And, a method of controlling a color liquid crystal display is characterized in receiving 16-bit data each clock, configuring two pixels each three clocks, and transferring video data for '(3/2) x N x M' clocks.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of an LCD controller according to a related art;

FIG. 2 is a diagram of an LCD controller input data format according to a related art;

FIG. 3A is an exemplary diagram of a 16-bit data format of a first clock in FIG. 2;

FIG. 3B is an exemplary diagram of a 16-bit data format of a second clock in FIG. 2;

FIG. 4 is a block diagram of an LCD controller according to the present invention;

FIG. 5 is a diagram of an input data format of an LCD controller according to the present invention;

FIG. 6A is an exemplary diagram of a 16-bit data format of a first clock in FIG. 5;

FIG. 6B is an exemplary diagram of a 16-bit data format of a second clock in FIG. 5; and

FIG. 6C is an exemplary diagram of a 16-bit data format of a third clock in FIG. 5.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

An apparatus for controlling an LCD and method thereof according to the present invention are explained with reference to the attached drawings as follows.

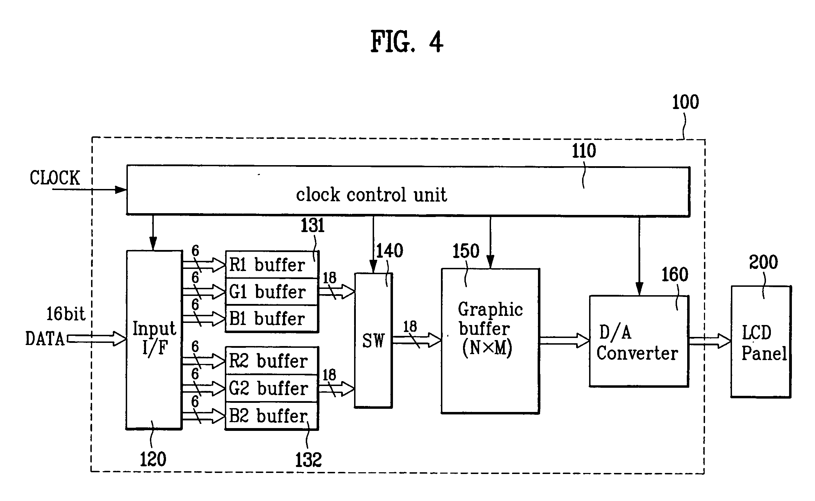

FIG. 4 is a block diagram of an LCD controller according to the present invention.

Referring to FIG. 4, an LCD controller 100 according to the present invention includes a clock control unit 110 providing a clock to operate each module, an interface unit 120 receiving 16-bit data each clock, a pair of 18-bit RGB buffers 131 and 132 storing data transferred via the interface unit 120, a graphic buffer 150 storing graphic data provided from a pair of the RGB buffers 131 and 132, a switching block 140 alternately reading data signals provided from a pair of the RGB buffers 131 and 132 according to the clock provided from the clock control unit to store in the graphic buffer 150, and a digital/analog converting unit 160 converting digital R/G/B data stored in the graphic buffer 150 to an analog signal to output.

The LCD controller according to the present invention differs from the related art LCD controller in including a pair of the RGB buffers and in using the switching block additionally. A pair of the RGB buffers 131 and 132 are used in storing pixel data temporarily. Each of the RGB buffers 131 and 132 includes an 18-bit buffer to store R, G and B data, each of which is represented by 6-bits. The switching block 140 plays a role in selecting data of R1, G1 and B1 buffers or data of R2, G2 and B2 buffers according to a control signal of the clock control unit 110.

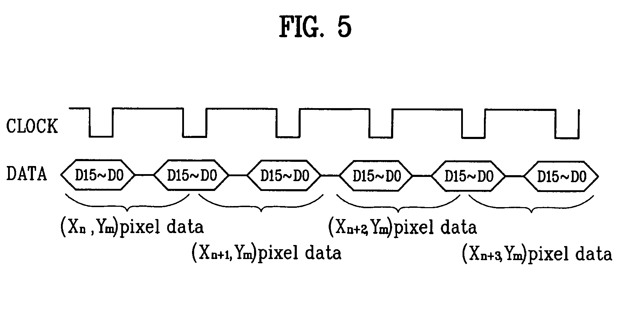

FIG. 5 is a diagram of an input data format of an LCD controller according to the present invention.

Referring to FIG. 5, 16-bit data is inputted each clock via the input interface of the LCD controller. And, data inputted for three clocks configure two pixels. For instance, it is assumed that pixel data of coordinates (Xn, Ym) and pixel data of coordinates (Xn+1, Ym) are inputted. 6-bit data between D13~D8 of the 16-bit data inputted for a first clock, as shown in FIG. 6A, indicate a brightness of R configuring a pixel of the coordinates (Xn, Ym) and 6-bit data between D5~D0 indicate a brightness of G configuring the pixel of the coordinates (Xn, Ym). 6-bit data between D13~D8 of the 16-bit data inputted for a second clock, as shown in FIG. 6B, indicate the brightness of B configuring the pixel of the coordinates (Xn, Ym) and 6-bit data between D5~D0 indicate a brightness of R configuring a pixel of the coordinates (Xn+1, Ym). And, 6-bit data between D13~D8 of the 16-bit data inputted for a third clock, as shown in FIG. 6C, indicate a brightness of G configuring the pixel of the coordinates (Xn+1, Ym) and 6-bit data between D5~D0 indicate a brightness of B configuring the pixel of the coordinates (Xn+1, Ym).

16-bit data inputted after the third clock follow the repetitions of the input formats of the previous three clocks. Hence, '(3/2) x N x M' clocks are needed to transfer one video data completely.

The above-inputted RGB data are alternately stored in a pair of the 18-bit buffers (R1/G1/B1 buffer and R2/G2/B2 buffer), respectively. And, data of the two RGB buffers 131 and 132 are alternately read by the switch block 140 to be stored in the graphic buffer 150. Finally, the video data stored in the graphic buffer 150 is converted to a voltage via the D/A converter 160. By the voltage, an LCD panel 200 is then driven. Besides, synchronization between the input interface unit 120 and the switching block 140 is controlled by the clock control unit 110.

Accordingly, the LCD controller of the present invention is capable of transferring the same-sized video with the number of clocks smaller than the related art number of clocks, thereby bringing about speed enhancement.

And, the present invention enables the CPU to do a different work for a saved time, thereby enhancing the practical applicability of the CPU.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of controlling a color liquid crystal display, comprising the steps of:
receiving 16-bit video data each clock; and
processing data of two pixels each three clocks to represent 260,000 colors.

2. A method of controlling a color liquid crystal display, comprising the steps of:
receiving 16-bit video data each clock;
temporarily storing R, G and B data represented by six bits each in a pair of 18-bit buffers;
selecting the data stored in a pair of the 18-bit buffers according to a control signal of a clock control unit;
storing the selected data in a graphic buffer; and
driving a color liquid crystal using the video data stored in the graphic buffer.

3. The method of claim 2, wherein the R, G and B data of the received 16-bit video data are alternately stored in a pair of RGB buffers.

4. The method of claim 2, wherein data of a pair of RGB buffers are alternately read according to a clock provided from the clock control unit to be stored in the graphic buffer.

5. The method of claim 2, wherein if n is an integer greater than zero, the data stored in the graphic buffer indicates brightnesses of R and G of an odd pixel for a (3n+1)^{th} clock, a brightness of B of an odd pixel and a brightness of G of an even pixel for a (3n+2)^{th} clock, or brightnesses of G and B of an even pixel for a 3n^{th} clock.

6. The method of claim 5, wherein 6-bit data between D13~D8 include either brightnesses of R and B of the odd pixel or a brightness of G of the even pixel and wherein 6-bit data between D5~D0 include either a brightness of G of the odd pixel or brightnesses of R and B of the even pixel.

7. An apparatus for controlling a color liquid crystal display, comprising:
a clock control unit providing a clock for operating each module;
an interface unit receiving 16-bit data each clock according to a control signal of the clock control unit;
a pair of 18-bit RGB buffers storing data transferred via the interface unit;
a graphic buffer storing graphic data provided from a pair of the RGB buffers;
a switching block storing data signals provided from a pair of the RGB buffers in the graphic buffer; and
a digital/analog converting unit converting digital R/G/B data stored in the graphic buffer to an analog signal to output.

8. The apparatus of claim 7, the interface unit alternately stores R, G and B data of the received 16-bit data in a pair of the RGB buffers.

9. The apparatus of claim 7, wherein the switching block alternately reads the data of a pair of the RGB buffers according to the clock provided from the clock control unit and stores the read data in the graphic buffer.

10. The apparatus of claim 7, wherein if n is an integer greater than zero, the data stored in the graphic buffer indicates brightnesses of R and G of an odd pixel for a (3n+1)^{th} clock, a brightness of B of an odd pixel and a brightness of G of an even pixel for a (3n+2)^{th} clock, or brightnesses of G and B of an even pixel for a 3n^{th} clock.

11. The apparatus of claim 10, wherein 6-bit data between D13~D8 include either brightnesses of R and B of the odd pixel or a brightness of G of the even pixel and wherein 6-bit data between D5~D0 include either a brightness of G of the odd pixel or brightnesses of R and B of the even pixel.
